Europäisches Patentamt

(19) European Patent Office

Office européen des brevets

(11) Publication number: **0 225 089 B1**

# EUROPEAN PATENT SPECIFICATION

(45) Date of publication of patent specification: **27.02.91**  (51) Int. Cl.⁵: **G21C 7/10**, G21C 3/06, B23K 9/04

(21) Application number: **86308833.2**

(22) Date of filing: **12.11.86**

(54) Wear resistant zirconium base alloy rod support arrangement for water reactors.

(30) Priority: **14.11.85 US 798193**

(43) Date of publication of application:
**10.06.87 Bulletin 87/24**

(45) Publication of the grant of the patent:
**27.02.91 Bulletin 91/09**

(84) Designated Contracting States:
**BE CH FR GB IT LI SE**

(56) References cited:'
**EP-A- 0 158 812**
**FR-A- 1 476 662**
**US-A- 4 405 851**

**CORROSION-NACE, vol. 30, no. 12, December 1974, pages 420-426, Westinghouse, Houston, US; G.A. WHITLOW et al.: "Sodium compatibility studies of low friction carbide coatings for reactor application"**

(73) Proprietor: **WESTINGHOUSE ELECTRIC CORPORATION**
**Westinghouse Building Gateway Center**
**Pittsburgh Pennsylvania 15235(US)**

(72) Inventor: **Gillett, James Edwin**
**400 Wren Drive**
**Greensburg, PA 15601(US)**
Inventor: **Shockling, Larry Anthony**
**116 Teton Drive**
**Pittsburgh, PA 15239(US)**
Inventor: **Sherwood, Donald Gayer**
**249 Lilac Drive**
**Monroeville, PA 15146(US)**

(74) Representative: **van Berlyn, Ronald Gilbert**
**23, Centre Heights**
**London, NW3 6JG(GB)**

## Description

The present invention pertains to ESD (electrospark deposited) coated zirconium base alloy structural elements for use in water reactors. It especially relates to water displacer rods having an ESD coating to minimize wear.

In pressurized water reactor internals designs Zircaloy components come into contact with AISI 304 stainless steel and other non-zirconium base alloy components in an environment of flowing high temperature, high pressure water. Under these conditions, vibrations may be produced in these contacting components causing repeated impacts and fretting wear to occur in the Zircaloy component, thereby reducing the in reactor lifetime of the Zircaloy component or causing complex and costly structural design changes to reduce the wear rate (if feasible).

Water displacer rodlets are low neutron cross section rods having a tubular Zircaloy cladding containing $ZrO_2$ pellets and helium. These rods may be movably held above a fuel assembly in a water reactor and are lowered into guide thimbles within the fuel assemblies as needed during reactor operation to displace water (coolant).

Typically 16 to 24 water displacer rods are held suspended above a fuel assembly by a spider vane. There may be 88 such vanes in a reactor.

The tubular Zircaloy cladding is hermetically sealed at both ends and may typically have an outer diameter of about 2.32 cm and a length in excess of about 2.9 m. It is now readily apparent that because of the slender structure of the water displacement rods, support is required along their length to minimize vibration due to the flowing coolant while also keeping them aligned with their respective thimble tubes in the fuel assembly.

Examples of water displacer rods, spider veins and their use are provided in Trevor A. Francis' U.S. Patent Application Serial No. 595,154 filed January 13, 1984, corresponding to EP.A 0158812, and Robert K. Gertsen et al. U.S.-A-4725401 corresponding to EP.A 0149181 (both assignee to the assignee herein, the Westinghouse Electric Corporation). These patent applications are hereby incorporated by reference.

One area where wear rates have been found to be particularly significant is where water displacer rods come into contact with AISI 304 stainless (304SS) steel guide supports. It was observed, in fretting wear tests, that while the primary purpose of the 304SS guide supports is to support and protect the rods from excessive wear, the Zircaloy tubular member forming the rod is susceptible to wear due to the relatively poor wear characteristics of the Zircaloy on the 304SS in the pressurized water reactor environment.

ESD coatings are being evaluated as a means to reduce wear between rubbing ferrous base articles in elevated temperature liquid sodium environments. In this regard reference is made to US-A 4,405,851. Preferably the zirconium base alloy member is Zircaloy-2 or 4 and the ESD coating is a $Cr_2CR_3$ coating of 0.025 to 0.05 mm in thickness. Preferably that non-zirconium base alloy component is also coated in the area of contact with an ESD coating. While $Cr_2C_3$ coatings are known to reduce wear they are quite expensive.

It is the principal object of the present invention to provide a pressurized water reactor with displacer rods which will not get stuck even after long reactor operation with the rods in one particular position.

With this object in view, the present invention resides in a pressurized water reactor having a core and at least one elongated tubular water displacer rod arranged so as to be movable into and out of the core in a guide tube of a fuel assembly, guide support plates disposed outside said core and spaced along the path of travel of said water displacer rod for supporting said displacer rod when withdrawn from said core; said water displacer rod passing through apertures in said guide support plates, said water displacer rod having a tube wall composed of a zirconium base alloy; and said guide support plates being composed of a stainless steel alloy, characterized in that electrospark deposition coatings of chromium carbide are formed on the wall areas of said displacer rod in annular sections which are distributed in spaced relation to each other along the length of said rod and metallurgically bonded to the outer surface thereof, the sections being normally disposed within said apertures and on the walls defining said apertures.

Displacer rods are maintained in position within the reactor core over a long period of time so that only the coated rod areas are in contact with the spaced support plates. Coating of thin rods only in spaced areas normally in contact with the support plates is considered sufficient protection to avoid failure.

The invention will become more readily apparent from the following description of a preferred embodiment thereof shown, by way of example only, in the accompanying drawings, wherein:

Figure 1 shows an embodiment of a zirconium base alloy member in accordance with the present invention.

Figure 2 is an enlarged view of a coated portion of the zirconium base alloy member shown in Figure 1 and an adjacent coated support member.

Figure 3 is a transverse cross section through the coated portion of the zirconium base alloy member shown in Figure 2 taken along III-III.

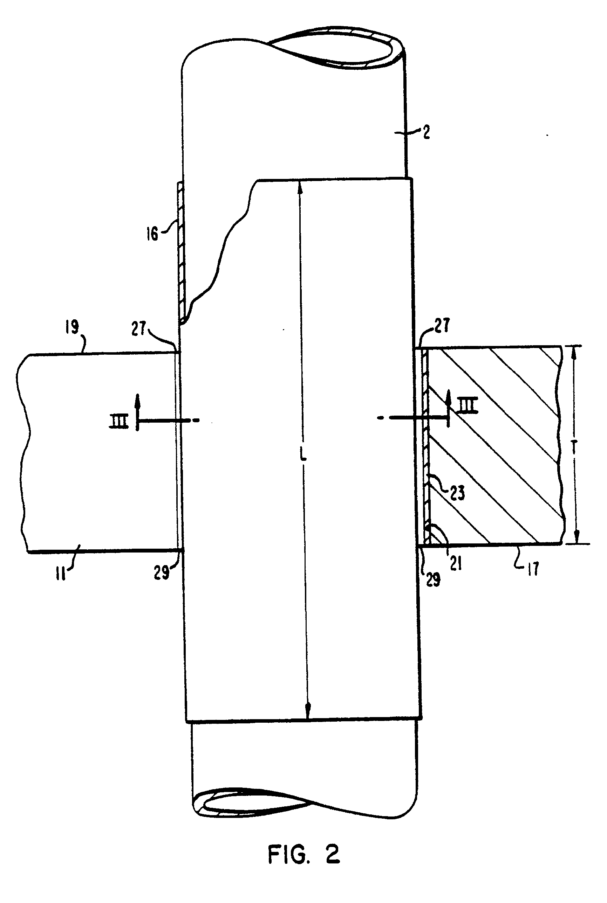

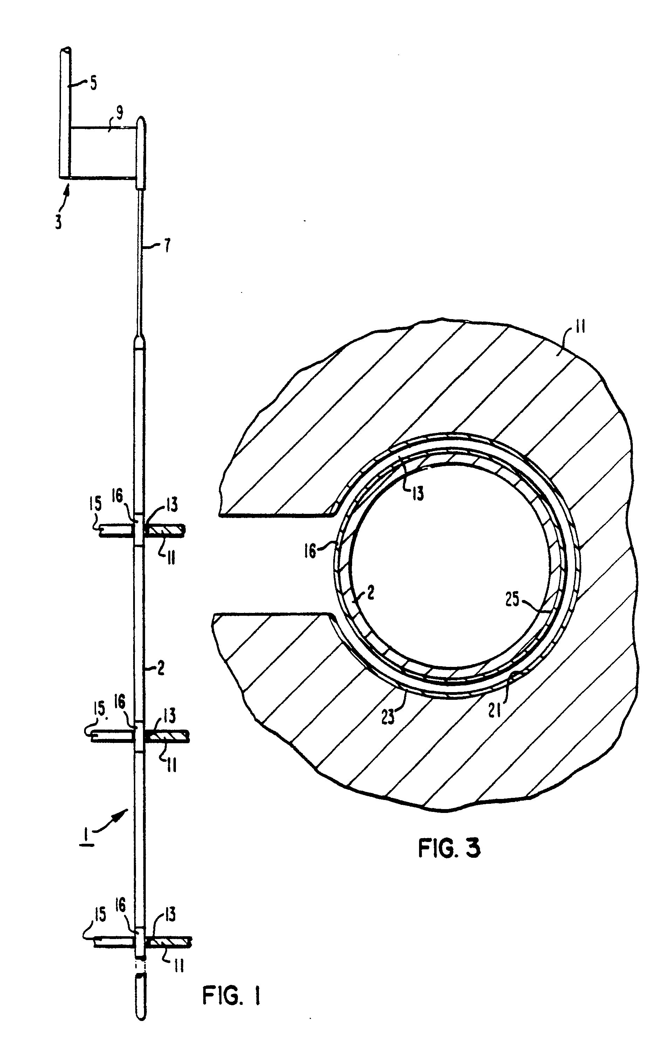

Shown in Figure 1 is a water displacement rod 1 which is composed of an elongate tubular zirconium base alloy (preferably Zircaloy-2 or 4) or a Zirconium-niobium alloy member 2 hermetically sealed at both ends and containing $ZrO_2$ pellets and helium. The rod is one of a number of rods which are connected to a spider assembly 3. The spider assembly 3 has a drive line 5 for moving the rods into and out of the thimble tubes of a nuclear fuel assembly. Rod 1 is connected to the spider assembly by a flexure member 7 located at the end of one of the spider vanes 9.

Distributed along the length of the rod 1 are plates 11 which extend transversely with respect to the longitudinal axis of the rod 1. Preferably there are six such support plates 11. Each support plate 11 is perforated through its thickness by holes 13 which are connected to each other by slots 15. Slots 15 and holes 13 are configured and sized to provide support to the rods while allowing the rod 1 and the spider assembly 3 to readily travel up and down through the support plates 11 without binding. The support plates are composed of a non-zirconium base alloy, preferably a stainless steel such as AISI 304 stainless. The rod flexure member 7 provides flexibility to prevent jamming of adjacent rods in the support plates. These flexures then permit small gaps to further reduce wear.

As shown in Figure 1 the rod in accordance with the present invention has been coated with a wear resistant ESD coating on the outside diameter surface of the zirconium base alloy tubular member 2 in those areas of the tubular member in the vicinity of the holes in support plates 11.

This is more clearly shown in Figure 2 which is an enlarged view of the zirconium base alloy tubular member 2 in the vicinity of a support plate 11. It is preferred, as shown in Figure 2, that the length of tube, L, having tube ESD coating 16 thereon at any one location should exceed the thickness, T, of the support plate 11, and more preferably, the coated portion of the tube should extend below plane of the bottom face 17 and above the plane of the top face 19 of support plate 11. Most preferably the coated length, L, is at least about three times the thickness, T, of plate 11.

As also shown in Figure 2, it is preferred that surface wall 21 of hole 13 which communicates with top surface 19 and bottom surface 17 of the support plate 11, also have an ESD coating 23 on it. ESD coating 23 may be selected from those described in the aforementioned US.A 4405851 relating to ESD coatings. Alternatively, an improved ferrous alloy for wear may be substituted for the 304SS support 11 eliminating the need for ESD coating 23.

A transverse cross section through the tubular member 2 and the support plate 11 is shown in Figure 3. The tubular member is preferably Zircaloy-2 or 4 in a fully recrystallized, partially recrystallized or cold worked and stress relief annealed condition. Metallurgically bonded to the outer surface of tube 2 is a relatively thin ESD coating 16. The Zircaloy tube may have an outside diameter of about 2.3 cm and a wall thickness of about 1.4 mm while the ESD coating has an average thickness between about 0.025 mm and 0.05 mm. At and near the metallurgical bond 25 between the coating 16 and the tube 2 is a diffusion zone and heat affected zone that may extend a few thousands of an inch into the wall of the tube 2, but leaves the bulk of the wall thickness in its original metallurgical condition. The ESD coating 16 is preferably obtained from a cemented $Cr_2C_3$ electrode as described in the aforementioned US.A-4405831

The ESD coating 23 on the wall 21 of the aperture 13 in support plate 11 also has a thickness of about 0.025 mm to 0.05 mm, but does not necessarily have the same composition as that found in coating 16 on tube 2. In addition to differences in coating composition caused by the diffusion of base metal into the coating (e.g. Zr in the case of tube 2 and Fe in the case of plate 11), the coating composition itself may differ in order to optimize the resistance of the wear couple to fretting wear under water reactor operating conditions. For example the coating 23 may be selected from those ESD coatings in accordance with the invention described in the aforementioned Johnson patent application.

While Figures 2 and 3 indicate that the surface of wall 21 of hole 13 has been entirely coated, it is also contemplated that wall 21 may remain uncoated or coated in only certain areas, for example in the areas of wall 21 which is in close proximity to the juncture 27 of wall 21 and top face 19 and the juncture 29 of wall 21 and bottom face 17.

## Claims

1. A pressurized water reactor having a core and at least one elongated tubular water displacer rod arranged so as to be movable into and out of the core in a guide tube of a fuel assembly, guide support plates disposed outside said core and spaced along the path of travel of said water displacer rod for supporting said displacer rod when withdrawn from said core; said water displacer rod passing through apertures in said guide support plates, said water displacer rod having a tube wall composed of a zirconium base alloy; and said guide support plates being composed of a stainless steel alloy, characterized in that electrospark deposition coatings of chromium carbide are formed on the wall areas of said displacer rod in annular sections which are distributed in spaced relation to each other along the length of said rod and metallurgically bonded to the outer surface thereof, the sections being normally disposed within said apertures and on the walls defining said apertures.

2. A reactor according to claim 1, characterized in that said coating is 0.025 to 0.05 mm thick.

**Revendications**

1. Réacteur à eau pressurisée comportant un coeur et au moins une barre de déplacement d'eau allongée et tubulaire, disposée de manière à pouvoir être déplacé jusque dans le coeur et hors du coeur dans un tube de guidage d'un assemblage combustible, des plaques formant supports de guidage disposées à l'extérieur dudit coeur et espacées le long du circuit de déplacement de ladite barre de déplacement d'eau, destinées à supporter ladite barre de déplacement d'eau lorsqu'elle est extraite dudit coeur; ladite barre de déplacement d'eau passant à travers des ouvertures ménagées dans lesdits plateaux formant supports de guidage, ladite barre de déplacement d'eau comportant une paroi tubulaire composée d'un alliage à base de zirconium; et lesdites plaques formant supports de guidage étant composés d'un alliage d'acier inoxydable, caractérisé en ce que des revêtements composés de carbure de chrome et déposés par étincelles électriques sont constitués sur les surfaces des parois de ladite barre de déplacement selon des sections annulaires qui sont réparties le long de ladite barre avec des espacements relatifs de l'une à l'autre et qui sont rendues adhérentes à la surface extérieure de cette barre par un procédé métallurgique, les sections étant normalement disposées à l'intérieur desdites ouvertures et sur les parois délimitant lesdites ouvertures.

2. Réacteur selon la revendication 1, caractérisé en ce que ledit revêtement a une épaisseur de 0,025 à 0,05 mm.

**Ansprüche**

1. Druckwasserreaktor mit einem Reaktorkern und mindestens einem verlängerten, röhrenförmigen Wasserverdrängungsstab, der derart angeordnet ist, daß er in den Kern hinein und aus ihm heraus in einem Führungsrohr eines Brennelementes bewegbar ist, wobei Führungsstützplatten außerhalb dieses Kerns vorgesehen sind und mit Zwischenräumen entlang des Verschiebeweges des Wasserverdrängungsstabs zum Abstützen des Verdrängungsstabs beim Zurückziehen aus dem Kern angeordnet sind; wobei der Wasserverdrängungsstab durch Öffnungen in den Führungsstützplatten geht und er eine Röhrenwand aus einer Legierung auf Zirkoniumbasis besitzt; und wobei die Führungsstützplatten aus einer rostfreien Stahllegierung bestehen, dadurch gekennzeichnet, daß funkenelektrisch abgelagerte Beschichtungen aus Chromkarbid auf den Wandbereichen des Verdrängungsstabs in ringförmigen Abschnitten angeordnet sind, die jeweils mit Zwischenräumen gegeneinander über die Länge des Stabs verteilt sind und mit der Außenfläche des Stabs metallurgisch verbunden sind, wobei die Abschnitte normalerweise innerhalb der Öffnungen und auf den die Öffnungen bildenden Wänden angeordnet sind.

2. Reaktor nach Anspruch 1, dadurch gekennzeichnet, daß die Beschichtung eine Dicke von 0,025 mm bis 0,05 mm aufweist.

FIG. 2

FIG. 3

FIG. 1